# EUROPEAN PATENT APPLICATION

(11) **EP 4 851 948 A1**
(43) Date of publication of application: **09.12.2026**
(21) Application number: 25180402.7
(22) Date of filing: 03.06.2025
(51) Int. Cl.: G06V 10/764, G06V 10/82, G06V 20/58, G06V 20/64

(54) **METHOD FOR DETECTING, CLASSIFYING, AND LOCALIZING STREET FURNITURE OBJECTS**

(71) Applicant: TomTom Global Content B.V., 1011 AC Amsterdam (NL)
(72) Inventor: JEEVESWARAN, Kishaan, 1011 AC Amsterdam (NL); AMELI KALKHORAN, SeyyedAmirHossein, 1011 AC Amsterdam (NL); JAIN, Nikita, 1011 AC Amsterdam (NL); BIERTIMPEL, David, 1011 AC Amsterdam (NL); DEWAN, Ayush, 1011 AC Amsterdam (NL)
(74) Representative: Bardehle Pagenberg Partnerschaft mbB Patentanwälte Rechtsanwälte

(57) **Abstract**

Computer-implemented method for detecting, classifying, and localizing street furniture objects, the method comprising the steps: obtaining session data associated with a drive of a mobile mapping vehicle, wherein the session data comprises panorama images and lidar point clouds, and wherein the lidar point clouds are associated with a geographic coordinate system; applying an object detection model to a first panorama image of the panorama images for determining at least one detected image object corresponding to at least one street furniture object; applying a classification model to at least an area of the first panorama image based on the detected image object for determining a class of the corresponding street furniture object; determining a first set of lidar points by projecting a first lidar point cloud of the lidar point clouds that is associated with the first panorama image onto an image plane of the first panorama image based at least in part on the detected image object; and determining a second set of lidar points that is associated with a location of the street furniture object in the geographic coordinate system by clustering the first set of lidar points.

## Description

### FIELD OF THE INVENTION

The present invention relates to a computer-implemented method for detecting, classifying, and localizing street furniture objects. Additionally, the present invention relates to a system comprising means for carrying out the method and a computer program comprising instructions which, when executed by a computer, cause the computer to perform the method.

### BACKGROUND

In the field of urban planning and infrastructure management, mobile mapping vehicles equipped with various sensors are commonly used to capture environmental data. Known systems typically employ cameras and lidar sensors to collect images and point clouds, which are subsequently processed to identify and map objects such as street furniture. Street furniture includes items like traffic lights, streetlights, traffic signs, and other objects along the street that are part of the urban landscape, including parked cars, bus stops, benches, bollards, parking meters, and emergency call boxes. These systems aim to provide accurate and detailed maps for various applications, including navigation, asset management, and urban planning.

Despite significant advancements in mobile mapping and object detection, challenges persist in accurately detecting, classifying, and localizing street furniture objects. Traditional approaches often rely solely on either image data or lidar data, leading to inaccuracies due to the inherent limitations of each data type. For example, image-based methods may struggle with varying lighting conditions and occlusions, while lidar-based methods may have difficulty distinguishing between different types of objects based solely on point cloud data. Additionally, the reliance on reflective surfaces in lidar data can result in false positives, such as misidentifying highly reflective walls as objects of interest.

Moreover, integrating data from multiple sessions or drives of mobile mapping vehicles to create a comprehensive map can be complex and error-prone, particularly when identifying correspondences between detected objects across different datasets. Traditional systems also tend to detect numerous irrelevant objects, necessitating additional processing to filter out these detections, which increases resource and compute time. Achieving accurate annotations for training data is another challenge, limiting the effectiveness of machine learning models in detecting and classifying various street furniture objects.

The present invention addresses these technical problems by providing a method and system for detecting, classifying, and localizing street furniture objects that at least partially overcomes the disadvantages of known methods and systems. Specifically, the invention aims to achieve at least one of reducing false positives, eliminating the necessity and drawbacks of relying on reflectance, streamlining the processing pipeline, enhancing the generalization and flexibility of the detection system, and consolidating findings across multiple sessions.

### SUMMARY

A first aspect of the invention provides a computer-implemented method for detecting, classifying, and localizing street furniture objects. The method comprises the steps: a) obtaining session data associated with a drive of a mobile mapping vehicle, wherein the session data comprises panorama images and lidar point clouds, and wherein the lidar point clouds are associated with a geographic coordinate system; b) applying an object detection model to a first panorama image of the panorama images for determining at least one detected image object corresponding to at least one street furniture object; c) applying a classification model to at least an area of the first panorama image based on the detected image object for determining a class of the corresponding street furniture object; d) determining a first set of lidar points by projecting a first lidar point cloud of the lidar point clouds that is associated with the first panorama image onto an image plane of the first panorama image based at least in part on the detected image object; and e) determining a second set of lidar points that is associated with a location of the street furniture object in the geographic coordinate system by clustering the first set of lidar points.

The first aspect involves a computer-implemented method for detecting, classifying, and localizing street furniture objects. In step a), the method begins by obtaining session data associated with a drive of a mobile mapping vehicle, which includes panorama images and lidar point clouds. The session data may be collected during a single drive of the mobile mapping vehicle, referred to as a session. This session data may encompass various sensor outputs, including GPS traces representing the trajectory of the vehicle, panoramic images captured at regular intervals, and lidar point clouds. The panoramic images may provide a comprehensive 360-degree view of the surrounding environment from a single viewpoint, while the lidar point clouds may offer precise, three-dimensional maps of surrounding surfaces. The lidar point clouds are associated with a geographic coordinate system, such as a global coordinate system including latitude and longitude, meaning that the coordinates at which the lidar sensor was located when the point cloud was obtained may be known. However, the point cloud may also be captured, defined, and stored in the context of a local coordinate system with the sensor at its origin. This association may allow for an accurate mapping and localization of detected street furniture objects. The data collected during the session may be converted into delta table formats to enable efficient processing through machine learning algorithms, ensuring that the system can handle large datasets effectively.

In step b), the method involves applying an object detection model to a first panorama image from the panorama images. This step is crucial for determining at least one detected image object that corresponds to at least one street furniture object. The object detection model, which may be based on advanced machine learning techniques like convolutional neural networks (CNNs), may analyze the panorama image to identify and locate objects of interest within the image. By leveraging the comprehensive up to 360-degree view that may be provided by the panorama image, the model may accurately detect street furniture objects even in complex urban environments. This may enhance accuracy and reliability in identifying relevant objects, which may be beneficial for subsequent classification and localization processes. This approach may further reduce the likelihood of missing objects and ensure that the detected objects are correctly identified, thereby improving the overall effectiveness of the method.

In step c), the method involves applying a classification model to at least an area of the first panorama image based on the detected image object. This step may be beneficial for determining the class of the corresponding street furniture object, such as identifying whether the object is, for example, a stop sign, speed sign, yield sign, or another type of street furniture. The classification model may utilize machine learning techniques, such as neural networks, to analyze the detected image object and assign it to a specific category. By focusing on the area of the panorama image where the object was detected, the model may accurately classify the object, taking into account its visual features and context within the image. This may improve accuracy in categorizing street furniture objects, which is beneficial for subsequent localization and mapping processes. This approach may ensure that each detected object is correctly identified and classified, thereby enhancing the overall reliability and effectiveness of the method.

In step d), the method involves determining a first set of lidar points by projecting a first lidar point cloud, which is associated with the first panorama image, onto the image plane of the first panorama image based at least in part on the detected image object. The association between a lidar point cloud and a panorama image may be based, for example, on a time window. The projection process may involve converting the three-dimensional coordinates of the lidar points into a two-dimensional coordinate system of the panorama image, effectively mapping the spatial data onto the visual representation. By aligning the lidar points with the detected image object in the panorama image, the method may accurately correlate the physical location of the street furniture object with its visual appearance. This "image-first approach" may enhance precision in localizing street furniture objects within the geographic coordinate system, as it combines the strengths of both lidar and image data with prioritizing the image data before utilizing lidar data. As compared to alternative methods that consider lidar data at an early stage - either alone or in combination with image data - the proposed method may reduce false positives caused by non-street furniture objects or elements with relatively high reflectivity. For example, it has been observed that in some areas, the type of paint commonly used for walls can result in a high number of false positives when methods rely on lidar data for initial candidate selection.

In step e), the method involves determining a second set of lidar points that is associated with the location of the street furniture object in the geographic coordinate system by clustering the first set of lidar points. This clustering process may utilize algorithms such as the well-known DBSCAN (Density-Based Spatial Clustering of Applications with Noise) algorithm to group the lidar points based on their spatial density, effectively identifying clusters that represent the street furniture object. The second set of lidar points may correspond to the cluster - identified from the first set of lidar points - that is closest to the mobile mapping vehicle. This step may further involve applying a distance threshold so that lidar points that are further away than the distance threshold are dropped. The distance threshold may be between 40m and 120m, preferably between 60m and 100m, even more preferably 80m. By clustering the first set of lidar points, the method may isolate the points that correspond to the actual location of the object, thereby distinguishing them from background points or noise. This may improve accuracy in pinpointing the exact location of street furniture objects within the geographic coordinate system, which may be beneficial for creating precise and reliable maps.

Overall, the method according to the first aspect may offer enhanced accuracy and reliability in detecting, classifying, and localizing street furniture objects by employing an image-first approach, which performs the analysis of a panoramic image before utilizing lidar point clouds. This approach may reduce false positives and eliminate the need for reflective surfaces, as it leverages the comprehensive visual data from panoramic images to accurately detect objects. By simplifying the processing pipeline and improving the generalization and flexibility of the detection system, the method ultimately leads to more precise and comprehensive mapping of urban infrastructure.

In some embodiments, the method according to the first aspect may involve associating the at least one detected image object with at least one of a confidence score of detection, dimensions of a bounding box, and/or a center in a coordinate system of the first panorama image. The confidence score of detection may indicate the likelihood that the detected image object corresponds to a street furniture object, thereby enhancing the reliability of the detection process. The dimensions of the bounding box may define the spatial extent (for example width and height) of the detected image object within the panorama image, providing precise localization of the object. Additionally, the center in the coordinate system of the first panorama image may facilitate accurate mapping of the detected object within the image. These features may collectively contribute to improved accuracy and reliability in detecting and localizing street furniture objects.

In some embodiments, the method according to the first aspect may further comprise dropping image objects associated with a confidence score of detection that is less than a confidence threshold. Additionally, the dimensions of the bounding box may define a bounding box area, and the method may further comprise dropping image objects associated with a bounding box area that is less than an area threshold. The confidence threshold may preferably be between 0.4 and 0.9, more preferably between 0.5 and 0.8, and even more preferably 0.6. Similarly, the area threshold may preferably be between 10 and 100 pixels, more preferably between 40 and 60 pixels, and even more preferably 50 pixels. These features may enhance the accuracy and reliability of the overall process by filtering out low-confidence detections and small or too distant objects, for which there are typically not enough lidar points within the corresponding bounding boxes to enable accurate localization. As a result, this approach may not only reduce errors in detection and classification, but also mitigate errors and inaccuracies in the localization.

In some embodiments, the method according to the first aspect may further comprise determining an image crop associated with the street furniture object by cropping the first panorama image based at least in part on the detected image object and applying the classification model on the determined image crop. This step may involve isolating the specific area of the panorama image where the detected object is located, thereby creating a focused image crop that contains only the relevant street furniture object. By applying the classification model to this image crop, the method may achieve more accurate and efficient classification of the object, as the model can concentrate on a smaller, more relevant portion of the image. This may lead to reduced computational load.

In some embodiments, the method according to the first aspect may involve capturing the first panorama image at a first time point. The first lidar point cloud may comprise lidar points that are captured within a time window (also referred to as "lidar scan time window") around this first time point. Lidar point clouds are typically captured in a continuous manner as the mobile mapping vehicle traverses its route. The lidar sensor emits laser pulses at a high frequency, continuously measuring distances to surrounding objects and surfaces, thereby generating a stream of three-dimensional spatial data. As a result, the captured point clouds provide a dense and temporally consistent representation of the environment along the vehicle's trajectory. The time window may be symmetrical around the first time point to ensure that the lidar data corresponds accurately to the time the panorama image was taken. The minimum length of the time window is determined by the time required for the panorama camera to complete a full 360-degree capture of its surroundings. The length of the time window may preferably be between 0.1 seconds and 5 seconds, more preferably between 1 second and 3 seconds, and even more preferably 2 seconds. This approach may enhance the synchronization between the panoramic images and the lidar point clouds, thereby improving the accuracy and reliability of the detected and localized street furniture objects. By ensuring that the lidar data is closely aligned with the time the image was captured, the method may further provide more precise spatial information.

In some embodiments, the method according to the first aspect may further comprise determining street furniture attributes of the street furniture object based at least in part on the second set of lidar points. These attributes may include, but are not limited to, the pose of the street furniture object, which refers to the orientation or direction the object is facing, and the dimensions of the street furniture object, such as its height and width. By analyzing the second set of lidar points, the method may accurately extract these attributes, providing detailed information about the detected objects. This may further improve characterizing street furniture objects, which may be beneficial for creating accurate and comprehensive maps. This detailed attribute information may improve the overall effectiveness of the method in urban infrastructure management by ensuring that the localized objects are not only accurately positioned but also correctly described in terms of their physical characteristics.

In some embodiments, the method according to the first aspect may involve repeating steps b) to e) with a second panorama image of the session data. This repetition may allow for the determination of at least one session street furniture object and/or session street furniture attributes associated with the street furniture object based at least in part on the first and second panorama images. The method may preferably comprise identifying correspondences between detected image objects based on the respective determined class and/or their location in the geographic coordinate system. In particular, such correspondences may be established in various ways, for example by initially clustering observations according to their location on the map and their heading or pose, and subsequently filtering by type, or alternatively by first grouping observations by type and then clustering based on their geographic location and pose. For example, there may be two street furniture objects, such as street signs, mounted on opposite sides of the same pole, which can be distinguished by considering both their pose and their type during the correspondence identification process. By analyzing multiple panorama images within one session, the method may enhance the accuracy and reliability of detecting and localizing street furniture objects, as it can cross-reference detections from different images to confirm the presence and attributes of the objects. This may reduce the likelihood of false positives and improve the overall precision of the mapping process.

In some embodiments, the method according to the first aspect may further comprise providing a plurality of session data, each associated with a different drive of a mobile mapping vehicle. Steps b) to e) may be repeated for each session data in the plurality of session data. The method may further involve determining at least one global street furniture object and/or global street furniture attributes associated with the street furniture object based at least in part on the plurality of session data. This process may preferably comprise identifying correspondences between detected image objects based on the respective determined class and/or their location in the geographic coordinate system. In particular, such correspondences may be established in various ways, for example by initially clustering observations according to their location on the map and their heading or pose, and subsequently filtering by type, or alternatively by first grouping observations by type and then clustering based on their geographic location and pose. For example, there may be two street furniture objects, such as signs, mounted on opposite sides of the same pole, which can be distinguished by considering both their pose and their type during the correspondence identification process. A drive may refer to a single session or route undertaken by a mobile mapping vehicle. A different drive may still include (partly) the same route as previous drives, resulting in overlapping street furniture objects being detected and recorded multiple times. This overlap allows for cross-referencing and validation of detected objects across different drives. By analyzing data from multiple drives, the method may enhance the accuracy and comprehensiveness of detecting and localizing street furniture objects.

In some embodiments, the method according to the first aspect may further comprise capturing the panorama images with a panorama camera of the mobile mapping vehicle and capturing the lidar point clouds with a lidar sensor of the mobile mapping vehicle. The panorama camera may provide comprehensive 360-degree visual data of the surrounding environment, while the lidar sensor may generate precise three-dimensional point clouds representing the spatial features of the area. By utilizing both the panorama camera and the lidar sensor, the method may achieve a more detailed and accurate representation of street furniture objects and other features within the geographic coordinate system. This dual-sensor approach may enhance the overall effectiveness of the method in urban infrastructure management by combining visual and spatial data to improve the detection, classification, and localization of street furniture objects.

In some embodiments, the method according to the first aspect may further comprise receiving the session data from a remote server or reading the session data from a local memory unit. This flexibility in data acquisition may allow the method to operate in various deployment scenarios, whether the data is stored locally on the mobile mapping vehicle or transmitted to a remote server for processing. By enabling both remote and local data access, the method may enhance its adaptability and efficiency in different operational environments. This may improve data management and accessibility, ensuring that the session data is readily available for processing regardless of the storage location. This capability may further facilitate seamless integration with existing infrastructure and support real-time or near-real-time processing of the collected data.

In some embodiments, the method according to the first aspect may further comprise determining the location of the street furniture object in the geographic coordinate system based at least in part on the second set of lidar points and trajectory information of the mobile mapping vehicle. This step may involve using the precise spatial data provided by the lidar points in conjunction with the recorded path and orientation of the vehicle to accurately map the position of the detected object. The trajectory may be defined, stored, and obtained in conjunction with the session data. By integrating the lidar data with the vehicle's trajectory information, the method may achieve a higher level of accuracy in localizing street furniture objects within the geographic coordinate system. This may further enhance precision in mapping and urban infrastructure management, as it ensures that the detected objects are accurately positioned relative to the vehicle's movement and the surrounding environment.

In some embodiments, the method according to the first aspect may further comprise storing at least one of the detected image object, the class of the street furniture object, the street furniture attributes, the second set of lidar points, and/or the location of the street furniture object in a mapping database comprising a map associated with the geographic coordinate system. The map may be two- or three-dimensional. This step may involve recording the relevant data in a structured format within the mapping database, ensuring that the information is readily accessible for future reference and analysis. By storing this data, the method may facilitate the creation of detailed and accurate maps that include comprehensive information about detected street furniture objects. This may further improve data management and accessibility, enabling efficient retrieval and utilization of the stored information for various applications such as navigation, urban planning, and infrastructure management.

In some embodiments, the method according to the first aspect may further comprise displaying the street furniture object on the map by means of a display. The displaying may be based at least in part on at least one of the detected image object, the class of the street furniture object, the street furniture attributes, and/or the location of the street furniture object. This step may involve visually representing the detected and localized street furniture objects on a two- or three-dimensional digital map, providing users with an intuitive and accessible way to view and interact with the mapped data. This may enhance visualization and usability of the street furniture data, facilitating better decision-making and planning in urban infrastructure management. By presenting the information on a display, the method may improve the accessibility and com-prehensibility of the data, making it easier for users to analyze and utilize the mapped street furniture objects for various applications such as navigation, asset management, and urban planning.

The method described herein may allow for indirect updating of street furniture information in a map. The output generated by the method may be combined with data from other sources to create, update, or verify street furniture information. This integration may ensure that the map data remains accurate and up-to-date by leveraging multiple data inputs.

Furthermore, the output of the method, either by itself or in combination with data from other sources, may be further processed to derive additional map data. For example, information about the location and value of speed limit signs may be utilized to derive speed limit information for a map. This additional processing may enhance the utility and comprehensiveness of the map data, providing valuable insights for various applications such as navigation and urban planning.

A second aspect of the invention provides a system for detecting, classifying, and localizing street furniture objects. The system comprises means for carrying out the method according to the first aspect. The system may also comprise means for carrying out the method according to any embodiment of the method according to the first aspect. This system may include various hardware and software components that work together to implement the steps of the method. The hardware components may include sensors such as panoramic cameras and lidar sensors mounted on a mobile mapping vehicle, as well as computing units for processing the collected data. The software components may include machine learning models for object detection and classification, algorithms for projecting lidar points onto image planes, and clustering techniques for localizing objects within a geographic coordinate system.

A third aspect of the invention provides a computer program comprising instructions which, when executed by a computer, cause the computer to perform the method. This computer program may include code that implements the steps of detecting, classifying, and localizing street furniture objects as described in the first aspect and its embodiments. The program may be stored on a non-transitory computer-readable medium and executed by a processor to carry out the method.

The disclosure includes further developments of the second or third aspects with features described in connection with the first aspect. The disclosure also includes further developments of the first aspect described in connection with the second or third aspects.

### BRIEF DESCRIPTION OF THE FIGURES

Embodiments of the invention are illustrated in the figures and are described below.
- Figure 1:: shows exemplary street furniture objects along a road.
- Figure 2:: shows session data comprising panorama images and lidar point clouds.
- Figure 3:: shows a panorama image captured by a mobile mapping vehicle, illustrating detected street furniture objects.
- Figure 4:: shows a panorama image with detected street furniture objects and lidar points of a lidar point cloud.
- Figure 5:: illustrates clustering a first set of lidar points.
- Figure 6:: shows an embodiment of a system according to the invention.
- Figure 7:: shows a schematic flowchart of an embodiment of the method according to the invention.

### DETAILED DESCRIPTION OF PREFERRED EMBODIMENTS

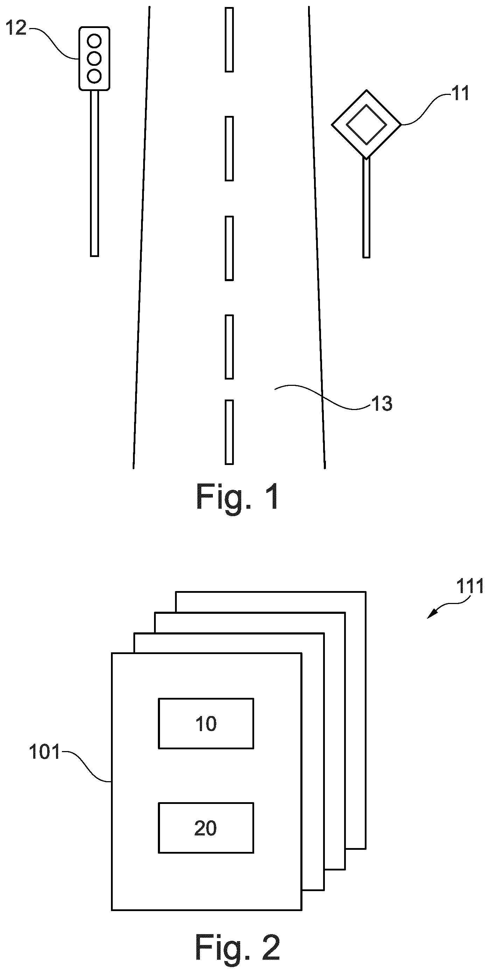

Figure 1 shows a schematic representation of a roadway environment illustrating street furniture objects. The figure depicts a road 13 with lane markings, and two types of street furniture objects positioned adjacent to the road above the road surface. On the left side of the road, there is a traffic light 12, which is characterized by a vertical pole supporting a rectangular housing containing three circular lights. On the right side of the road, there is a traffic sign 11, in particular a priority road sign, which is characterized by a vertical pole supporting a diamond-shaped sign with an inner diamond shape. The traffic light 12 is positioned to control vehicular traffic flow, typically indicating stop, caution, and go signals through its three lights. The traffic sign 11 is positioned to provide information or warnings to drivers, such as indicating priority roads or other traffic regulations (e.g., yield and the like). The road 13 is depicted with dashed lane markings, indicating the division of lanes for vehicular travel. The lane markings are for guiding vehicles along the designated paths and ensuring orderly traffic movement.

Figure 1 illustrates an exemplary spatial arrangement of the street furniture objects in relation to the road, providing a visual context for the detection, classification, and localization processes described in the method. The traffic light 12 and traffic sign 11 are examples of street furniture objects that can be detected and processed using the described computer-implemented method according to the first aspect, which involves obtaining session data, applying object detection and classification models, projecting lidar point clouds, and determining the geographic location of the street furniture objects.

The schematic representation in Figure 1 serves as an example of types of street furniture objects that the system aims to detect, classify, and localize, highlighting their typical placement and appearance in a roadway environment. It is also possible that the road 13 has no markings or even more markings. Furthermore, it is possible to carry out the method according to the invention on an unpaved road. Street furniture objects may also be parked cars or other objects placed along the road 13.

A mobile mapping vehicle 1, equipped with a panorama camera and a lidar sensor, can systematically collect panorama images 10 and lidar point clouds 20 in one session as it traverses its designated route also referred to as a drive. The panorama camera may capture comprehensive wide-view, e.g., 360-degree, images of the surrounding environment at regular intervals - associated with time points - providing a detailed visual representation from a single viewpoint. Simultaneously, the lidar sensor emits laser pulses to measure distances to the various objects and surfaces around the mobile mapping vehicle 1, generating precise three-dimensional lidar point clouds 20. These lidar point clouds 20 are associated with coordinates relative to the mobile mapping vehicle 1, allowing for accurate mapping of the captured environment. Further, the location of the mobile mapping vehicle 1 with respect to a global geographic coordinate system (including latitude and longitude) may be known at the time point of capturing a lidar point cloud 20 so that said lidar point cloud 20 is also associated with global geographic coordinates. The global geographic coordinate system associated with the lidar point clouds 20 ensures that the spatial data is accurately mapped to real-world locations.

Figure 2 shows a schematic representation of session data 101 associated with a drive of the mobile mapping vehicle 1. The session data 101 comprises the captured panorama images 10 and lidar point clouds 20. The panorama images 10 represent the visual data captured during the drive, while the lidar point clouds 20 represent the spatial data obtained through the lidar scanning. Thereby, the session data 101 serves as the foundation for various processing steps, including object detection, classification, and localization. If a step of the method according to the invention is carried out with a given panorama image and a given lidar point cloud, it may be possible to repeat the step with a further panorama image and/or a further lidar point cloud.

In an embodiment, the method according to the invention begins in step a) with obtaining the session data 101 associated with a drive of the mobile mapping vehicle 1, including the panorama images 10 and lidar point clouds 20. In this example, the session data 101 is collected during a single drive of the mobile mapping vehicle, that is in one session. The session data 101 also includes GPS (global positioning system) traces of the mobile mapping vehicle 1 that are associated with the drive/session and allow an association of each of the panorama images 10 and lidar point clouds 20 with a location in the global geographic coordinate system. Therefore, the coordinates at which the lidar sensor (and the panorama camera) were located when the point cloud was obtained is known. The lidar point clouds 20 are further stored in the session data 101 in the context of a local coordinate system with the lidar sensor at its origin. By combining the associated global geographic coordinate system and the local coordinate system, each point of a lidar point cloud 20 can be localized. The data collected during the session is converted into delta table formats to enable efficient processing through machine learning algorithms. This ensures that large datasets, i.e. large session data 101, can be processed effectively.

Additionally, Figure 2 illustrates a plurality of session data 111, which comprises multiple instances of session data 101. This plurality of session data 111 indicates that the mobile mapping vehicle 1 may undertake several drives or sessions, each generating its own session data 101. Each session can be associated with a different drive, wherein in each drive the same, completely different, and partially overlapping routes can be taken. The plurality of session data 111 allows for the aggregation and comparison of data from different drives. In particular, if a step or a sequence of steps is carried out with a given session data, it may be possible to repeat the step or the sequence of steps with a further session data. By collecting data from multiple drives, cross-referencing and/or validating the information may lead to more accurate and comprehensive results. This approach may be particularly useful in dynamic environments where street furniture objects may change or move over time.

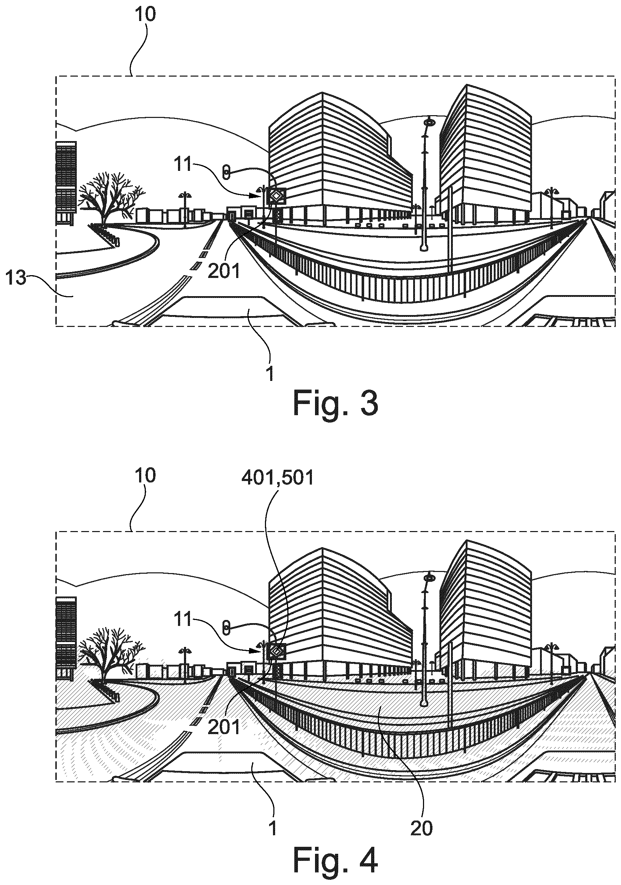

Figure 3 illustrates a panorama image 10 captured by the mobile mapping vehicle 1 during its drive along the road 13. The panorama image 10 encompasses a wide field of view, providing a comprehensive visual representation of the surrounding environment. Within the panorama image 10, various street furniture objects such as traffic sign 11 and other street furniture objects are visible. The mobile mapping vehicle 1 is positioned at the bottom of the panorama image 10, indicating the vantage point from which the image was captured. The panorama image 10 also shows various urban features such as buildings, roads, and pedestrian pathways, providing context to the detected street furniture objects.

In step b), the described embodiment of the method involves applying an object detection model to the panorama image 10 for determining at least one detected image object 201 that, in this case, corresponds to the street sign 11, i.e. a street furniture object.

The object detection model, which in this case is based on convolutional neural networks (CNNs), analyzed the panorama image 10 and identified and located the street sign 11 as an object of interest within the image. The detected image object 201 is associated with a confidence score of detection that is between 0 and 1. The confidence score of detection indicates the likelihood that the detection image object 201 indeed corresponds to a street furniture object. In this case, because the street sign 11 is clearly visible in the image, the confidence score of the detected image object 201 is 0.9. The detected image object is further associated with a bounding box that is shown as a rectangle around the sign 11 in Figure 3. The bounding box has dimensions including a width and a height. The center of the bounding box is in this case associated with the center of the street sign 11 and related to the center of the panorama image 10. Thereby, the position of the bounding box and hence of the street sign 11 within the panorama image 10 is known.

The embodiment of the method utilizes a confidence threshold of 0.6. Some image objects in the panorama image 10 were dropped because they are associated with a confidence score less than said confidence threshold. Additionally, some image objects were dropped because their associated bounding box defined a bounding box area less than an area threshold of 50 pixels. In other embodiments, the area threshold is given relative to the total resolution of the panorama image 10.

In general, Convolutional Neural Networks (CNNs) are a class of neural networks that can be trained to detect objects of interest from image data. For example, a CNN can be trained on a large set of panorama images together with corresponding annotations, wherein the annotations comprise bounding boxes in the image plane for objects of interest. During training, the network learns to identify such objects based on the pixel values of the images and, when applied to new image data, predicts a set of bounding boxes and associated categories, each with a corresponding confidence value. The use of such a network provides flexibility, as the framework may be readily adapted to detect new types of objects of interest or to cover new geographical regions by extending the training set and improving accuracy through training on more diverse and robust annotated data.

In step c), the described embodiment of the method involves applying a classification model to the bounding box area associated with the detected image object 201. Thereby, the method comprises the further step of determining an image crop associated with the street furniture object by cropping the panorama image 10 based on the detected image object 201, in particular based on the bounding box associated with the detected image object 201. As can be seen in Figure 3, the bounding box area associated with the image object 201 includes the visual information associated with the street sign 11. The classification model is applied to the image crop and hence to the visual information of a street furniture object, meaning that the visual information of a street furniture object is used as an input to the classification model. The output of the classification model is the determined class of the street furniture object that is associated with the visual information in the bounding box. In this case, the class of the street furniture object is "priority road sign". By focusing on the bounding box area, that is the area of the panorama image 10 where the image object 201 was detected, the classification model can accurately classify the image object 201.

The exemplary classification model is based on neural networks that have been trained in a supervised manner on a dataset comprising pairs of visual information of a street furniture object and an associated class. Neural networks and training methods thereof are well-known by the skilled person.

The network used in step c) can a CNN of different type than that used in step b), which is configured to predict only a category and a confidence score based on an image input. Such a network may be trained on a collection of input images (or image crops) and corresponding labels, for example, an image of a stop sign with the corresponding label "stop sign" mapped to one of the output categories.

To improve the accuracy of either classification model, various measures may be taken. For instance, the training set may be selected to include a sufficient number of examples for each type of street furniture object to be identified, and/or to include a sufficient number of edge cases, such as images with poor lighting conditions, shadows, occlusions, or other challenging scenarios. This approach may enhance the robustness and generalization capability of the trained models.

Figure 4 illustrates the panorama image 10 captured by the mobile mapping vehicle 1 in conjunction with one of the captured lidar point clouds 20. The lidar point cloud 20 is superimposed on the panorama image 10 and serves as a spatial data source that complements the visual information captured by the camera.

In step d), the described embodiment of the method involves determining a first set of lidar points 401 by projecting the lidar point cloud 20, which is associated with the panorama image 10, onto the image plane of the panorama image 10 based on the detected image object 201. In particular, the lidar point cloud 20 is superimposed on the panorama image 10 and the lidar points within the bounding box area associated with the detected image object 201 are determined as the first set of lidar points 401. By associating the first set of lidar points 401 with the detected image object 201, the method can accurately correlate the physical location of the street furniture object (street sign 11) with its visual appearance in the panorama image 10.

The association between the lidar point cloud 20 and the panorama image 10 is based on a time window. In particular, the panorama image 10 is captured at a first time point. The lidar point cloud 20 comprises lidar points that are captured within the time window around this first time point. The time window is in this case symmetrical around the first time point to ensure that the lidar data corresponds accurately to the time the panorama image 10 was taken. The length of the time window is in this embodiment 2 seconds. This approach enhances the synchronization between the panoramic images and the lidar point clouds, thereby improving the accuracy and reliability of the detected and localized street furniture objects, while still ensuring that a sufficient number of lidar points are collected within the relevant time window to enable accurate localization. In particular, the time window can thereby be such that the number of lidar points acquired during a full 360-degree capture of the camera is sufficient for precise spatial correlation.

In step e), the described embodiment of the method involves determining a second set of lidar points 501 that is associated with the location of the street furniture object (street sign 11) in the geographic coordinate system by clustering the first set of lidar points 401. This clustering process utilizes the well-known DBSCAN algorithm to group the lidar points based on their spatial density, effectively identifying clusters that represent the street furniture object.

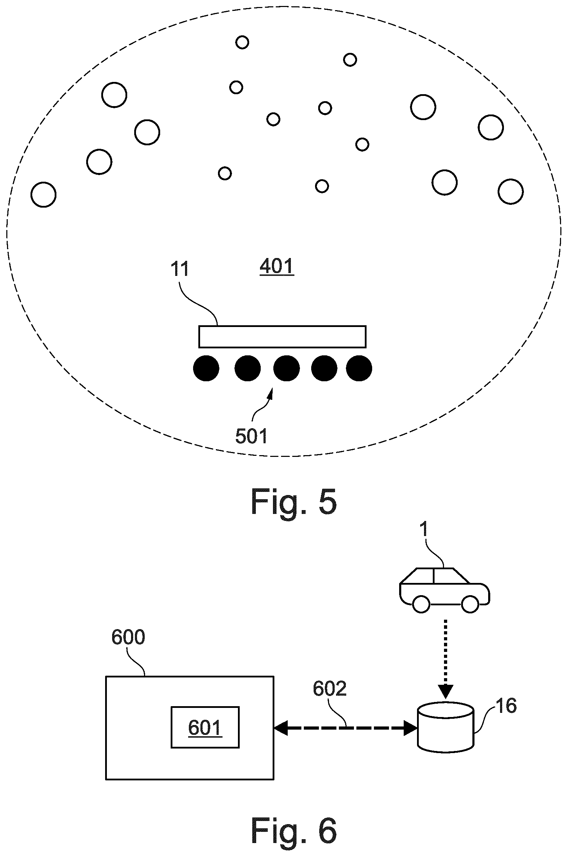

Figure 5 depicts a schematic illustration of the clustering process. The first set of lidar points 401 encompasses all lidar points within the area enclosed by the depicted dashed line, represented by white and black circles. As can be seen, a second set of lidar points 501 consists of accumulated and dense lidar points near the surface of the street sign 11 (shown in top view). The second set is depicted by black circles only. The small white circles represent lidar points that are behind the street sign 11 at a different height, i.e. above or below the street sign 11. This indicates that the clustering can be performed in three-dimensional space. Due to the clustering, the method can accurately associate the lidar points of the second set of lidar points 501 with the street sign 11, hence isolating the lidar points that correspond to the actual location of the street sign 11 and thereby distinguishing them from background points or noise (meaning the white circles).

In the described embodiment, the method further comprises determining the location of the street furniture object (street sign 11) in the geographic coordinate system based on the second set of lidar points 501 and trajectory information of the mobile mapping vehicle 1. This step hence involves using the precise spatial data provided by the second set of lidar points 501 in conjunction with a recorded path and orientation of the mobile mapping vehicle 1 to accurately map the position of the street sign 11. By integrating the lidar data with the vehicle's trajectory information, the method achieves a higher level of accuracy in localizing the street sign 11 within the geographic coordinate system.

In the described embodiment, the method further comprises determining street furniture attributes of the street furniture object (street sign 11) based on the second set of lidar points 501. These attributes include the pose of the street sign 11, meaning the orientation or direction the street sign 11 is facing, and the dimensions of the street sign 11, meaning its height and width. Referring again to Figure 5, it can be seen that by analyzing the second set of lidar points 501, the width of the street sign 11 can be determined. Further, since it is known that street signs are flat, the pose of the street sign can be determined from the second set of lidar points 501.

In the described embodiment, the method further comprises storing at least one of the detected image object, the class of the street furniture object, the street furniture attributes, the second set of lidar points, and/or the location of the street furniture object in a mapping database comprising a map associated with the geographic coordinate system. The map may be two- or three-dimensional. This step may involve recording the relevant data in a structured format within the mapping database, ensuring that the information is readily accessible for future reference and analysis. By storing this data, the method may facilitate the creation of detailed and accurate maps that include comprehensive information about detected street furniture objects. This may further improve data management and accessibility, enabling efficient retrieval and utilization of the stored information for various applications such as navigation, urban planning, and infrastructure management.

In the described embodiment, the method involves repeating steps b) to e) with a second panorama image of the session data 101. All aspects of the detecting, classifying, projecting and clustering are thereby repeated with the second panorama image. The second panorama image is captured at a second time point that is different from the first time point of the panorama image 10 shown in Figures 3 and 4. The time interval between the first and second time points is referred to as a time step. In this embodiment, the time step is one second.

This repetition of steps b) to e) with the second panorama image allows determining a session street furniture object and session street furniture attributes associated with the street furniture object on the panorama image 10 and the second panorama image. The street sign 11 is also shown on the second panorama image because the time step is small enough so that the mobile mapping vehicle 1 did not yet pass the street sign 11 when the second panorama image was captured. Correspondences between the detected image object 201 (street sign 11) are identified based on the corresponding determined class, in this case "priority street sign". In addition, the clustering of results from different time points preferably also takes into account the location of the detected objects in the geographic coordinate system, in order to ensure that the correspondences relate to the same street furniture object. This approach increases the reliability of associating detections across multiple images or time points with the same physical object in the environment. By analyzing the two panorama images within one session, the method enhances the accuracy and reliability of detecting and localizing the street sign 11, as detections from different images are cross-referenced to confirm the presence and attributes of the street sign 11.

In the described embodiment, the method further comprises providing the plurality of session data 111, each associated with a different drive of the mobile mapping vehicle 1. Steps b) to e) are also repeated for each session data in the plurality of session data 111. The described embodiment hence includes iterations of steps b) to e) over multiple session data and within each session data over multiple panorama images. Thereby, a global street furniture object comprising global street furniture attributes associated with the street furniture object is determined. This implies that if the mobile mapping vehicle 1 captures the street sign 11 during both a first and a second drive, the detection, classification, and localization of the street sign 11 can be validated and improved.

In the described embodiment, the method further comprises storing the detected image object 201, the class of the street furniture object (street sign 11), the street furniture attributes, the second set of lidar points 501, and the location of the street furniture object (street sign 11) in a mapping database 50 comprising a map associated with the geographic coordinate system. This step involves recording the relevant data in a structured format within the mapping database, ensuring that the information is readily accessible for future reference and analysis. By storing this data, the embodiment facilitates the creation of detailed and accurate maps that include comprehensive information about detected street furniture objects such as the street sign 11.

In the described embodiment, the method further comprises receiving the session data 101 (and the plurality of session data 111) from a remote server 16 via a data connection. In another embodiment, the session data 101 is read from a local memory unit.

In the described embodiment, the method further comprises displaying the street furniture object (street sign 11) on the map by means of a display 60. The displaying is based on the detected image object 201, the class "priority road sign" of the street furniture object, the street furniture attributes, and the location of the street furniture object. In particular, this step involves visually representing the detected and localized street sign 11 on a digital map, providing users with an intuitive and accessible way to view and interact with the mapped data. The map is two dimensional and the street sign 11 is depicted as an icon representing the class of the street sign 11. In another embodiment, the map is three dimensional and the street sign 11 is represented by a three-dimensional model associated with the street furniture attributed of the street sign 11.

In one particular example, a specific implementation utilizing a 2 second lidar scan time window, a distance threshold of 80 meters, and a minimum cluster size parameter of 20% - wherein at least 20% of the lidar points within the bounding box are required to correspond to the detected street furniture object - was found to achieve a recall rate of 70.97% and a precision rate of 79.5%. Alternative implementations of the described embodiment with less restrictive parameters have been found to achieve higher precision (of up to 85.12%), albeit with a corresponding reduction in recall rate (66.89%). The method may be further enhanced through additional refinements, for instance by specifically optimizing the training of the object detection model and/or the classification model, and/or by fine-tuning various thresholds and parameters. Such refinements may further improve the balance between precision and recall rates, thereby enhancing the overall effectiveness of the street furniture object detection, classification, and localization process.

The described embodiment allows for indirect updating of street furniture information in the map. The output generated by the described embodiments are combined with data from other sources to create, update, and verify street furniture information. This integration ensures that the map data remains accurate and up-to-date by leveraging multiple data inputs.

Furthermore, the output of the described embodiments are further processed to derive additional map data. In particular, information about the location and value of speed limit signs is utilized to derive speed limit information for the map. Furthermore, the location and class of the street sign 11 are utilized to derive the information that the road 13 is a priority road.

Figure 6 illustrates an embodiment of a system 600 for carrying out the method according to the invention. In particular, the system 600 is a computer that comprises means for carrying out the method described above in the form of a processing unit 601. The system 600 is connected via data connection 602 to the remote server 16 host-ing the plurality of session data 111 that was provided by the mobile mapping vehicle 1.

The system 600 runs a computer program comprising instructions which, when executed by the computer, cause the computer to perform the method according to any embodiment described above.

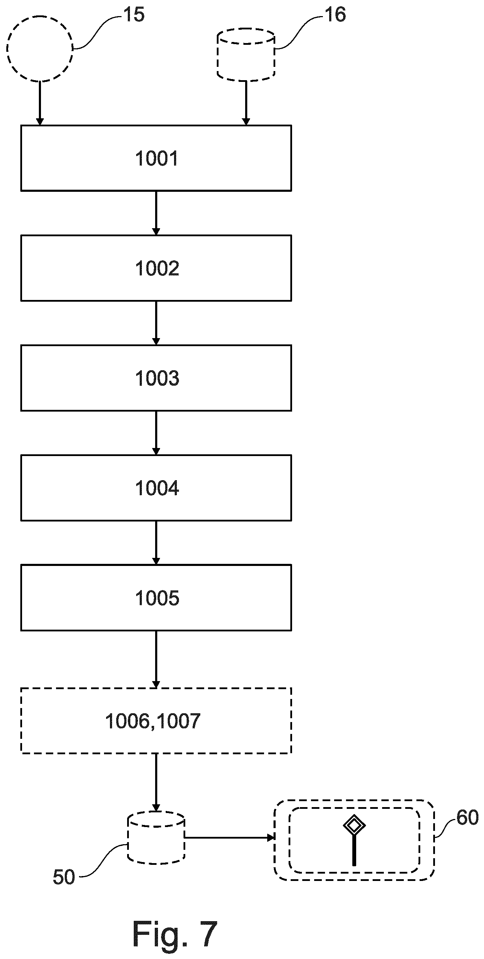

Figure 7 illustrates a flowchart detailing the sequential operations involved in the detection, classification, and localization of street furniture objects in an embodiment of the method according to the invention. The method is initialized by a start command 15.

The shown embodiment is a computer-implemented method for detecting, classifying, and localizing street furniture objects 11, 12, the method comprising the steps: a) obtaining 1001 session data 101 associated with a drive of a mobile mapping vehicle 1, wherein the session data 101 comprises panorama images 10 and lidar point clouds 20, and wherein the lidar point clouds 20 are associated with a geographic coordinate system; b) applying 1002 an object detection model to a first panorama image of the panorama images 10 for determining at least one detected image object 201 corresponding to at least one street furniture object 11, 12; c) applying 1003 a classification model to at least an area of the first panorama image 10 based on the detected image object 201 for determining a class of the corresponding street furniture object; d) determining 1004 a first set of lidar points 401 by projecting a first lidar point cloud of the lidar point clouds 20 that is associated with the first panorama image onto an image plane of the first panorama image based at least in part on the detected image object 201; and e) determining 1005 a second set of lidar points 501 that is associated with a location of the street furniture object 11, 12 in the geographic coordinate system by clustering the first set of lidar points 401.

The shown embodiment further comprises the optional steps of repeating 1006 steps b) to e) with a second panorama image of the session data 101; and determining at least one session street furniture object and/or session street furniture attributes associated with the street furniture object 11, 12 based at least in part on the first and second panorama images, preferably comprising identifying correspondences between detected image objects based on the corresponding determined class.

The shown embodiment further comprises the optional steps of providing a plurality of session data 111, each associated with a different drive of a mobile mapping vehicle 1; repeating 1007 steps b to e for each session data 101 in the plurality of session data 111; and determining at least one global street furniture object and/or global street furniture attributes associated with the street furniture object 11, 12 based at least in part on the plurality of session data 111, preferably comprising identifying correspondences between detected image objects based on the corresponding determined class.

At least one of the detected image object 201, the class of the street furniture object, the street furniture attributes, the second set of lidar points 501, and/or the location of the street furniture object 11, 12 is stored in a mapping database 50 comprising a map associated with the geographic coordinate system.

The street furniture object 11, 12 is displayed on the map by means of a display 60, wherein the displaying is preferably based at least in part on at least one of the image object 201, the class of the street furniture object, the street furniture attributes, and/or the location of the street furniture object 11, 12.

## Claims

1. A computer-implemented method for detecting, classifying, and localizing street furniture objects (11, 12), the method comprising the steps:
a. obtaining (1001) session data (101) associated with a drive of a mobile mapping vehicle (1), wherein the session data (101) comprises panorama images (10) and lidar point clouds (20), and wherein the lidar point clouds (20) are associated with a geographic coordinate system;
b. applying (1002) an object detection model to a first panorama image of the panorama images (10) for determining at least one detected image object (201) corresponding to at least one street furniture object (11, 12);
c. applying (1003) a classification model to at least an area of the first panorama image (10) based on the detected image object (201) for determining a class of the corresponding street furniture object;
d. determining (1004) a first set of lidar points (401) by projecting a first lidar point cloud of the lidar point clouds (20) that is associated with the first panorama image onto an image plane of the first panorama image based at least in part on the detected image object (201); and
e. determining (1005) a second set of lidar points (501) that is associated with a location of the street furniture object (11, 12) in the geographic coordinate system by clustering the first set of lidar points (401).

2. The method of claim 1, wherein the at least one detected image object (201) is associated with at least one of a confidence score of detection, dimensions of a bounding box, and/or a centre in a coordinate system of the first panorama image.

3. The method of claim 2, wherein step b further comprises dropping image objects (201) associated with a confidence score of detection that is less than a confidence threshold, and/or
wherein the dimensions of the bounding box define a bounding box area, and wherein step b further comprises dropping image objects (201) associated with a bounding box area that is less than an area threshold;
wherein the confidence threshold is preferably between 0.4 and 0.9, more preferably between 0.5 and 0.8, even more preferably 0.6; and
wherein the area threshold is preferably between 10 and 100 pixels, more preferably between 40 and 60 pixels, even more preferably 50 pixels.

4. The method of any one of claims 1 to 3, wherein step c further comprises determining an image crop associated with the street furniture object (11, 12) by cropping the first panorama image based at least in part on the detected image object (201) and applying the classification model on the determined image crop.

5. The method of any one of claims 1 to 4, wherein the first panorama image is captured at a first time point;
wherein the first lidar point cloud comprises lidar points captured within a time window around the first time point;
wherein the time window is preferably symmetrical around the first time point; and
wherein the time window preferably has a length of between 0.1s and 5s, more preferably between 1s and 3s, and even more preferably 2s.

6. The method of any one of claims 1 to 5, further comprising determining street furniture attributes of the street furniture object (11, 12) based at least in part on the second set of lidar points (501); and
wherein the street furniture attributes comprise preferably a pose of the street furniture object (11, 12) and/or dimensions of the street furniture object (11, 12).

7. The method of any one of claims 1 to 6, further comprising repeating (1006) steps b to e with a second panorama image of the session data (101); and
the method further comprising determining at least one session street furniture object and/or session street furniture attributes associated with the street furniture object (11, 12) based at least in part on the first and second panorama images,
preferably comprising identifying correspondences between detected image objects based on the corresponding determined class.

8. The method of any one of claims 1 to 7, wherein step a further comprises providing a plurality of session data (111), each associated with a different drive of a mobile mapping vehicle (1);
the method further comprising repeating (1007) steps b to e for each session data (101) in the plurality of session data (111); and
the method further comprising determining at least one global street furniture object and/or global street furniture attributes associated with the street furniture object (11, 12) based at least in part on the plurality of session data (111),
preferably comprising identifying correspondences between detected image objects based on the corresponding determined class.

9. The method of any one of claims 1 to 8, wherein step a further comprises capturing the panorama images (10) with a panorama camera of the mobile mapping vehicle (1) and capturing the lidar point clouds (20) with a lidar sensor of the mobile mapping vehicle (1).

10. The method of any one of claims 1 to 9, wherein step a further comprises receiving the session data (101) from a remote server (15) or reading the session data (101) from a local memory unit (16).

11. The method of any one of claims 1 to 10, further comprising determining the location of the street furniture object (11, 12) in the geographic coordinate system based at least in part on the second set of lidar points (501) and trajectory information of the mobile mapping vehicle (1).

12. The method of any one of claims 1 to 11, further comprising storing at least one of the detected image object (201), the class of the street furniture object, the street furniture attributes, the second set of lidar points (501), and/or the location of the street furniture object (11, 12) in a mapping database (50) comprising a map associated with the geographic coordinate system.

13. The method of claim 12, further comprising displaying the street furniture object (11, 12) on the map by means of a display (60);
wherein the displaying is preferably based at least in part on at least one of the image object (201), the class of the street furniture object, the street furniture attributes, and/or the location of the street furniture object (11, 12).

14. A system (600) for detecting, classifying, and localizing street furniture objects (11, 12), the system comprising means for carrying out the method of any one of claims 1 to 13.

15. A computer program comprising instructions which, when executed by a computer, cause the computer to perform the method of any one of claims 1-13.
